# EUROPEAN PATENT SPECIFICATION

(11) **EP 0 769 755 B1**
(45) Date of publication and mention of the grant of the patent: **09.04.2003**
(21) Application number: 96116194.0
(22) Date of filing: 09.10.1996
(51) Int. Cl.: G06K 15/00

(54) **Apparatus and method for printing partially repetitive data**
Vorrichtung und Verfahren zum Drucken von sich teilweise wiederholenden Daten
Dispositif et méthode d'impression de données partiellement répétitives

(30) Priority: 13.10.1995 JP 26587895
(43) Date of publication of application: 23.04.1997
(73) Proprietor: SEIKO EPSON CORPORATION, Shinjuku-ku, Tokyo 163-0811 (JP)
(72) Inventor: Koakutsu, Naohiko, c/o Seiko Epson Corporation, Suwa-shi, Nagano-ken, 392 (JP); Hyonaga, Takuya, c/o Seiko Epson Corporation, Suwa-shi, Nagano-ken, 392 (JP)
(74) Representative: Hoffmann, Eckart, Dipl.-Ing.

(56) References cited:
- EP-A- 0 217 447
- EP-A- 0 310 712
- WO-A-88/01768
- WO-A-93/01565
- US-A- 5 104 245
- PATENT ABSTRACTS OF JAPAN vol. 095, no. 001, 28 February 1995 & JP 06 282388 A (CANON INC), 7 October 1994,

## Description

The present invention is related to a printing apparatus equipped with a storage means for storing print image data generated based on print data received from a host device, and more specifically it is related to a printing apparatus adapted to print the same or similar print image data stored in said storage means a plurality of times. Therefore, the present invention is particularly suited to printing apparatus for POS or ECR use that perform printing on transaction slips.

These so-called terminal printers develop print data received from the host device, a personal computer for example, as character codes or graphic language data into print image data in one-page or one-row units, for example, and store these data in an image buffer, which is the storage means. The development of print image data from character codes is normally done by means of a character generator, and the development of graphic data is performed by using certain drawing algorithms. The position in the image buffer at which the print image data are stored is determined by a print position command sent from the host device prior to the print data. This development process takes substantial amount of time when the amount of data is large. Upon completion of the development the obtained print image data are normally printed in accordance with control data, e.g., a print (execution) command, from the host computer.

In the conventional printers, print image data are automatically erased from the image buffer once they have been printed, i.e., a print command has been executed. "Erased" means the image buffer is cleared rather than having print image data overwritten by new print image data. The reason for clearing the image buffer rather than simply overwriting print image data with new print image data is that overwriting does not necessarily result in all of the previous print image data being overwritten. That is, when new print data correspond to only part of the image buffer, previous print image data still exist in the remaining part of the buffer, resulting in new print image data being superposed on previous ones.

In this kind of conventional printer, there was a problem when the user wanted to repeatedly print the same or only partially different data on a plurality of recording medium sheets, or when the user wanted to repeat printing the same or only partially different rows on the same recording medium sheet. That is, since conventional printers erased print image data from the image buffer after printing them, all of the print data had to be resent from the host computer and it was necessary for the printer to develop the print image data again based on these print data. For this reason, the processing time was long in this case and, therefore, the so-called throughput remained low.

In recent years, there has been a demand to improve the throughput of printers, in particular, in the POS and ECR field. Therefore, there is a demand to shorten the processing time.

US-A-5,104,245, against which the claims are delimited, discloses a printing apparatus adapted to receive print data and control data from a host device. The apparatus comprises storage means for storing print image data corresponding to print data received from the host device, printing means for printing said print image data on a recording medium in accordance with a predetermined print command received from the host device, and erasure means for erasing the print image data in said storage means in response to said printing means having printed these data. Erasure control means are provided that are responsive to predetermined mode control command from the host device for setting either a first mode, in which the erasure means is enabled, or a second mode, in which the erasure means is disabled. In this prior art the printing process requires a sequence of two control commands, the mode control command and, subsequently, the print command.

EP-A-0 217 447 discloses a raster image memory for storing print image data and the control of the memory. If the contents of the memory is to be printed once, the memory is cleared after having been printed. If the contents is to be printed multiple times, the contents is not cleared after having been printed.

EP-A-0 310712 also discloses a raster image memory for storing print image data and the control of the memory. The document describes that either a read process or a read-modify-write process may be executed to only read or read and change the data in the memory.

Printing multiple copies of a page stored as bitmap in a memory without recomposing the page each time is also disclosed in WO-A-88/01768.

The object of the present invention is to solve the above problems and to provide a printing apparatus capable of realizing high throughput printing even when the same or only partially different data are repeatedly printed while lightening the load on the host computer and being easy for the user to use. Another object of the invention is to provide a corresponding method of controlling the printing apparatus.

These objects are achieved with a printing apparatus as claimed in claim 1 and a method as claimed in claim 3. Preferred embodiments of the invention are subject-matter of the dependent claims 2 and 4.

According to the invention, the first erasure means is enabled by one and disabled by the other one of two alternative print commands received from the host device so that by sending the corresponding command erasure of the print image data that have been printed may be suppressed. Therefore, when print image data are to be used again, the host device can send that one of the print commands that results in erasure being not performed. On the other hand, when printing of previous print image data is not to be repeated, the host device sends the other print command that causes the erasure to be performed. Thus, by means of the printer of the present invention, after one page/line of print data sent from the host computer is developed into print image data and printed, the same print image data or substantially the same, i.e., only partially changed or appended image data can be used to perform printing again, whereby a high-throughput printer can be offered while reducing the load on the host computer and offering the user an easy-to-use printer.

Other features and advantages of the present invention will be apparent from the following description of preferred embodiments taken in conjunction with the accompanying drawings.
- Fig. 1: is a functional block diagram illustrating an example of a printing apparatus.
- Fig. 2: is a block diagram showing the circuit configuration of a printing apparatus embodying the present invention.
- Fig. 3: is a flowchart showing an outline of the processing performed by CPU 21 in the configuration according to Fig. 1.
- Fig. 4: is a flowchart showing the processing of command 11 in step S6 in the flowchart in Fig. 3.
- Fig. 5: is a functional block diagram illustrating a first embodiment of the present invention.
- Fig. 6: is a flowchart showing the command processing equivalent to step S6 in the flowchart depicting the general operation of the CPU in the example of Fig. 3.
- Fig. 7: is a functional block diagram illustrating a second embodiment of the present invention.
- Fig. 8: is a diagram showing the storage of print image data in an embodiment of the present invention.

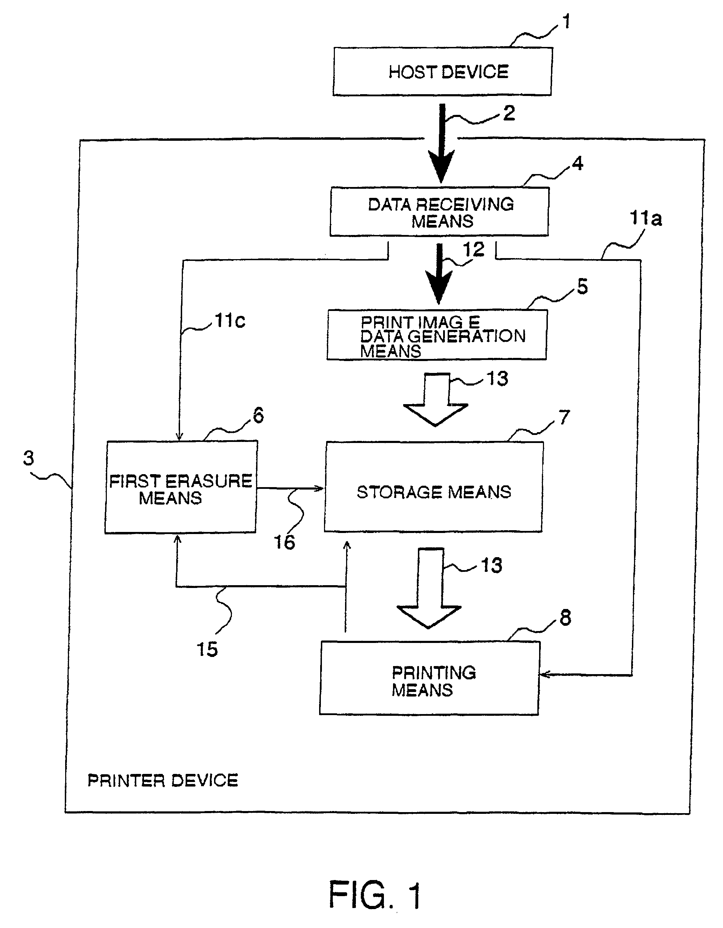

Fig. 1 is a block diagram illustrating the functions of a printing apparatus (simply referred to as "printer" in the following) of an example of a printing apparatus. Host device 1 is a universal information processing device that performs various types of information processing, and it causes the desired print processing to be performed corresponding to the results of information processing by sending data 2, which include print data and control data, to data receiving means 4 of printer 3 via an interface signal line. Printer 3 comprises data receiving means 4, print image data generation means 5, first erasure means 6, storage means 7 and printing means 8. Control data are data for controlling the printer and include control commands (including print position commands) and their parameters. Below these are referred to simply as commands. Print data as the term is used in this specification include character codes, graphics language data and print format control codes (such as line feed, carriage return etc.).

Data receiving means 4 receives data 2 sent from host device 1, distinguishes between commands 11 and print data 12 and also analyzes commands 11. Print data 12 are sent to print image data generation means 5 and commands 11 are sent to one of the processing means (5, 6, 8) depending on the type of command.

Print image data generation means 5 generates print image data 13 based on the print data 12 and stores them in storage means 7. More specifically, character codes provided as print data are sent to the character generator not shown in the drawings, and character pixel patterns which are output from the character generator are sent to storage means 7 together with position information generated according to a print position command.

Storage means 7 stores print image data 13 at positions specified by the above position information. Print image data 13 are read out in accordance with the read request 15 from printing means 8. Stored print image data 13 are erased in accordance with erasure request 16 from first erasure means 6. As described above, erasure here does not include so-called overwriting and print image data are not stored at the same time as erasure.

Printing means 8 sends read request 15 to storage means 7 in response to print command 11a, and print image data 13 read out from storage means 7 are printed on a recording medium (not shown) at a position corresponding to their position in storage means 7. In one implementation printing means 8 includes a serial or a line print unit (not shown) comprising a print head and a mechanism for causing a relative movement between the print head and the recording medium in order to print at the prescribed position on the recording medium. Such serial print unit is well-known and its explanation is omitted here. It will be understood by those skilled in the art that the invention may be implemented with other types of print unit such as a page print unit etc..

First erasure means 6 receives read request 15 and detects that print image data 13 in storage means 7 have been read out for printing. In response to this, erasure request 16 is or is not output to storage means 7 in accordance with erasure mode selection command 11c from data receiving means 4. That is, if erasure has been disabled by erasure mode selection command 11c, erasure request 16 is not output, but if erasure is enabled by this command, then erasure request 16 is output. Erasure request 16 can be output after all of print image data 13 are read out from storage means 7, or when some of the print image data are read, it can be output with designating the position of data to be erased.

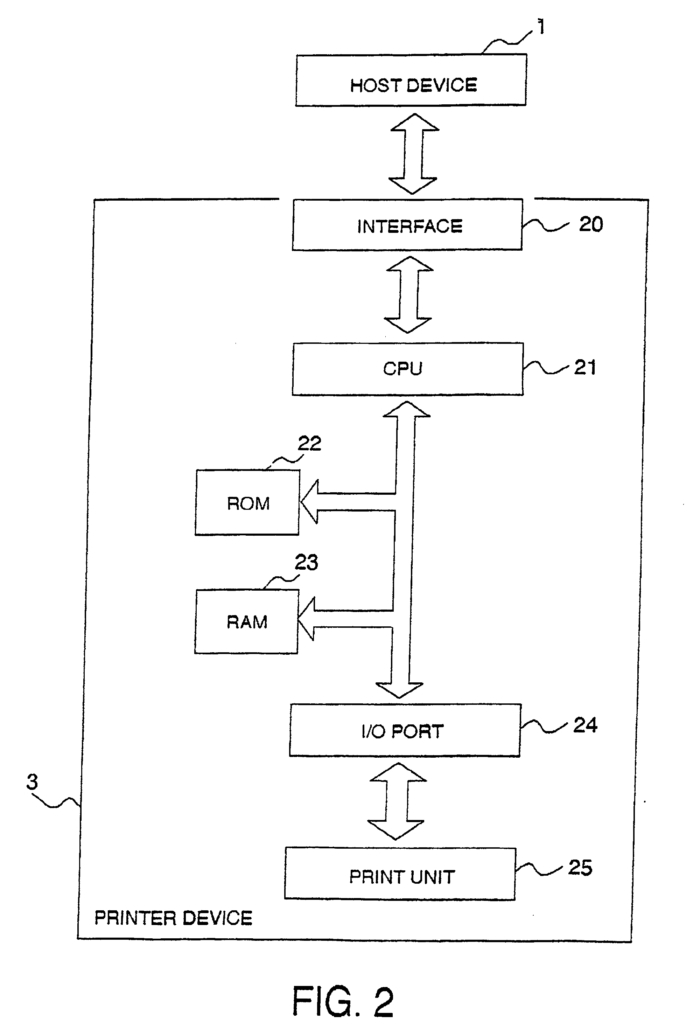

Referring to Fig. 2, a circuit configuration suitable for implementing such a printer is explained. The control circuit of printer 3 comprises interface 20 for communicating with host device 1, CPU 21 (central processing unit) which controls the electric power and electric/electronic elements of print unit 25 and detects their state via I/O port 24, ROM 22 which stores the program that determines the operating sequences of the CPU, and RAM 23 which makes up part of storage means 7.

In this example, almost all of the functional blocks in Fig. 1 above are realized by using CPU 21. That is, data receiving means 4 comprises interface 20 and CPU 21; print image data generation means comprises ROM 22, which contains a character generator, and CPU 21; storage means 7 comprises RAM 23, which includes the so-called image buffer, and CPU 21; the first erasure means comprises CPU 21; and the printing means 8 comprises CPU 21, I/O port 24 and print unit 25.

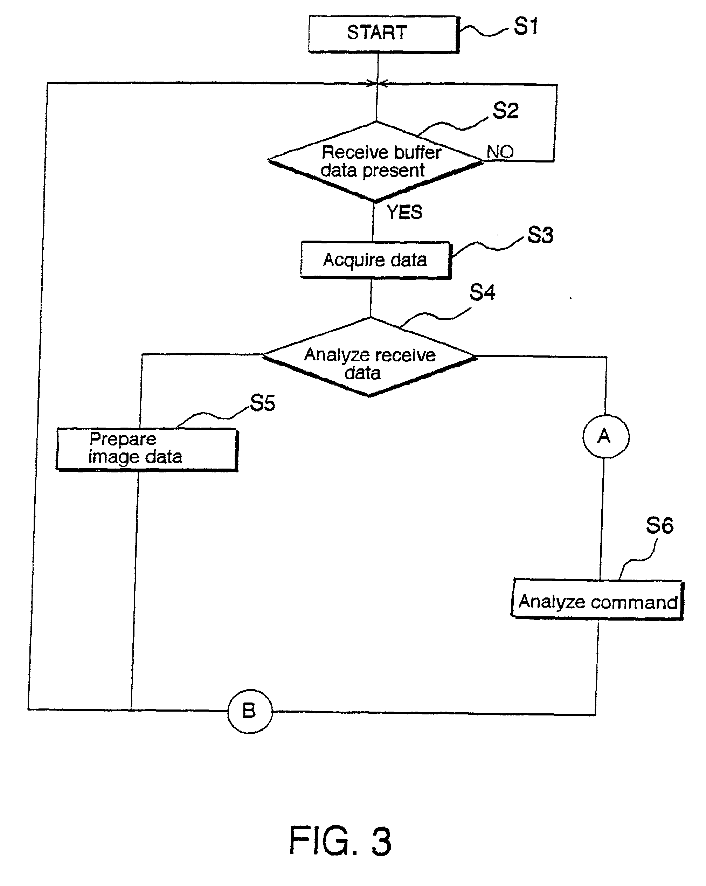

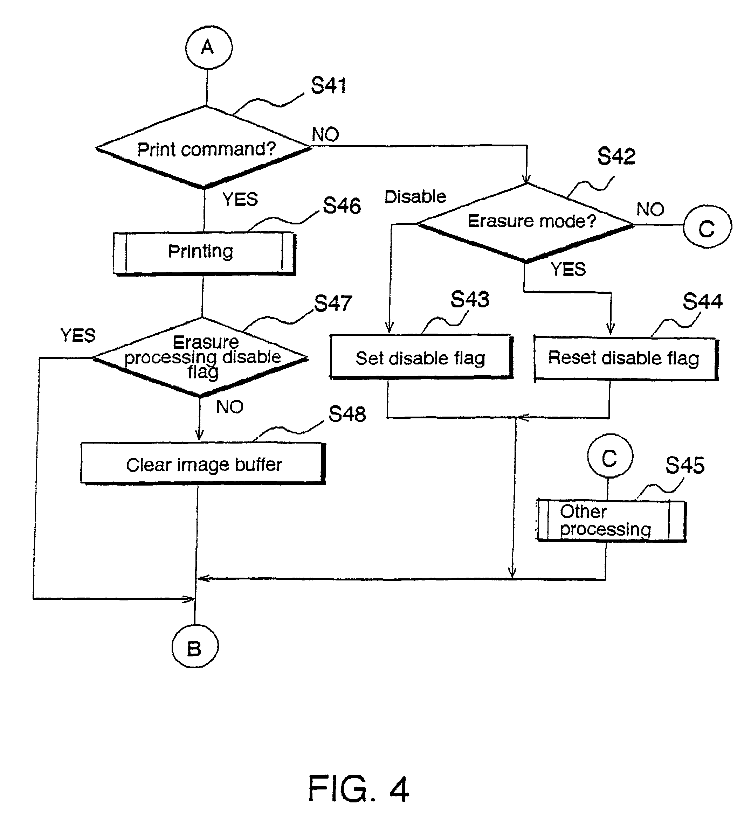

The operation of CPU 21 corresponding to the individual functional blocks is explained below with reference to Figs. 3 and 4. Fig. 3 is a general flowchart illustrating the processing performed by CPU 21. In step S1, the power source of the printer is turned on and the entire printer is initialized. That is, following initialization of CPU 21, the control circuit is checked for proper operation; e.g., print unit 25 is initialized by moving the print head to a home position, etc., RAM 23 is initialized, and the host device is notified of the printer's ready state. This processing is also performed at the time of reset resulting from operating a reset switch not shown.

Next, in step S2, a receive buffer is checked to determine if there are data 2. The receive buffer is built into interface 20 for temporarily storing data received according to a predetermined communication procedure with host device 1. The well-known RS-232C interface is one example of an interface that may be employed in the present invention. If there are no data 2 in the receive buffer, then processing loops to step S2, and if there are, then these data are acquired in step S3. Acquired data 2 are analyzed in step S4 and identified as either print data 12 or a command 11. As described below, a command 11 is further analyzed in step S6 (steps S41, 42). The processing up to this point corresponds to the function of data receiving means 4 in Fig. 1.

If the data is judged to be print data 12 in data analysis in step S4, then print image data 13 are generated in step S5 and stored in image buffer 7a explained in more detail below. This processing corresponds to part of the function of print image data generation means 5 and storage means 7 in Fig. 1.

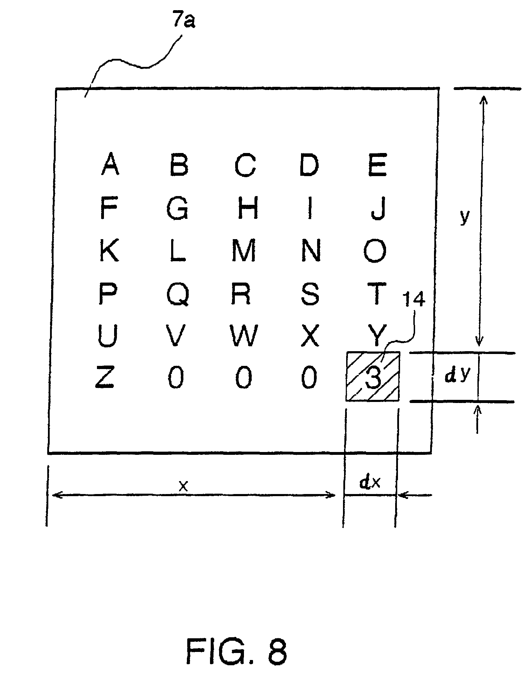

An example of this processing is explained next using Fig. 8. Fig. 8 is a diagram showing an example of the storage state of print image data. In the figure, 7a is the image buffer which is a portion in RAM 23. As an example, Fig. 8 shows the result of developing print data 12 to print image data 13 (pixel patterns) in image buffer 7a when the following sequence of print data and format control codes is sent from host device 1: "A, B, C, D, E, LF, F, G, H, I, J, LF, K, L, M, N, O, LF, P, Q, R, S, T, LF, U, V, W, X, Y, LF, Z, 0, 0, 0, 3". Here, "LF" is a format control code indicating line feed and is represented in hexadecimal notation as 0A_{H}. In this example, a total of 35 bytes of data (30 bytes of character codes and 5 bytes of format control codes) are sent from the host computer.

Fig. 4 is a flowchart describing the processing of commands 11 in step S6. In step S41, it is judged whether or not command 11 is print command 11a. If it is not print command 11a, then it is judged whether or not it is erasure mode selection command 11c in step S42. If it is not erasure mode selection command 11c, then further analysis of the command and its processing, e.g., loading of recording medium in the printer, are performed in step S45.

If it is judged to be the erasure mode selection command in step S42, then the erasure mode is set according to the selection. In this example, if the command instructs erasure disable mode, then an erasure disable flag is set, while if erasure mode is instructed, this flag is reset. This erasure disable flag is referenced in step S47 upon completion of printing in step S46 described below.

If the command 11 is judged to be a print command in step S41, then printing is performed in step S46. This printing corresponds to part of the function of printing means 8 in Fig. 1. Since, as mentioned before, printing may be performed by any of well-known print units, a detailed explanation is omitted here.

When printing step S46 is completed, the state of the erasure disable flag mentioned above is examined. If the erasure disable flag is in a reset state, image buffer 7a is cleared. Step S42 to step S44 and step S47 represent the function of first erasure means 6 in Fig. 1. Step S48 is included in the function of storage means 7.

Since a configuration is used wherein the erasure mode or erasure disable mode is selected in this way, data that have been sent once and developed into print image data can be repeatedly printed a plurality of times without being erased by sending a print command after selecting the erasure disable mode. Further, when updating the data to new print data, the image buffer can be cleared in advance by sending a print command for the previous data after selecting the erasure enable mode. Therefore, by sending only print data of those areas that need to be printed, printing of only those new data and without remaining previous print image data is possible.

As will be understood, the example explained above uses an erasure mode selection command 11c having a parameter for selecting either erasure mode or erasure disable mode. The erasure disable flag is reset or set, respectively, in accordance with the parameter of the command. This example is not an embodiment of the invention and given as background information only. One possible modification of the example explained above is to automatically clear the erasure disable flag at the end of the process in Fig. 4 (immediately before (B)) and to use an erasure disable command (without parameter) instead of the erasure mode selection command. Such erasure disable command sent before a print command would set the erasure disable flag and prevent the image buffer 7a from being cleared after execution of the subsequent print command. All print commands would have to be preceded by such erasure disable command, except for the last one of a series of print commands for repeated printing of the same data and a print command for data that are to be printed one time only.

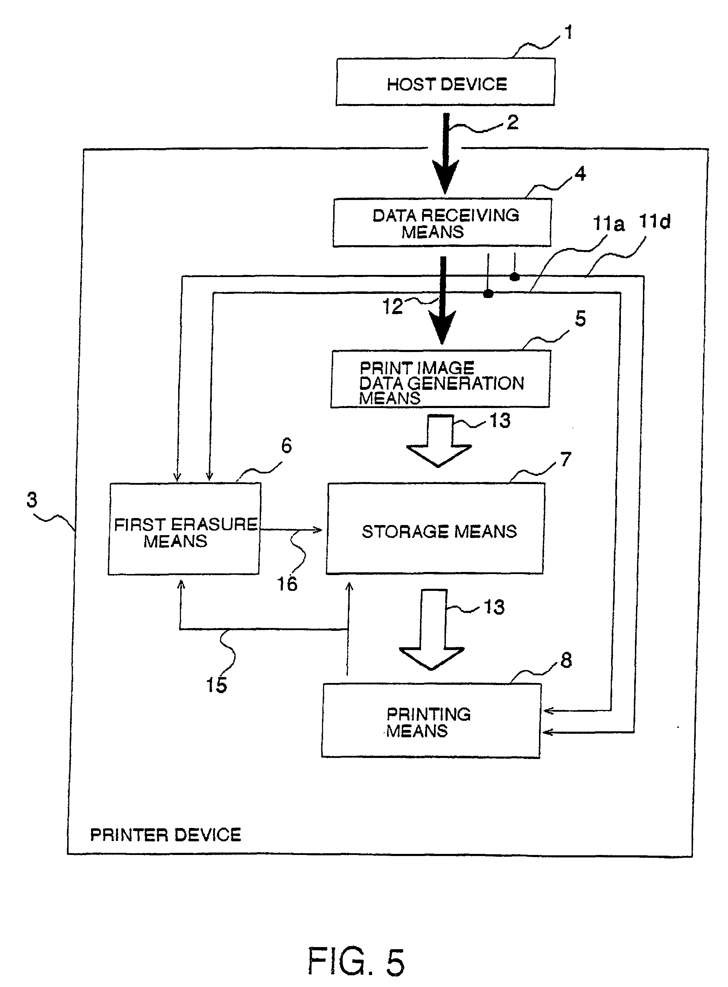

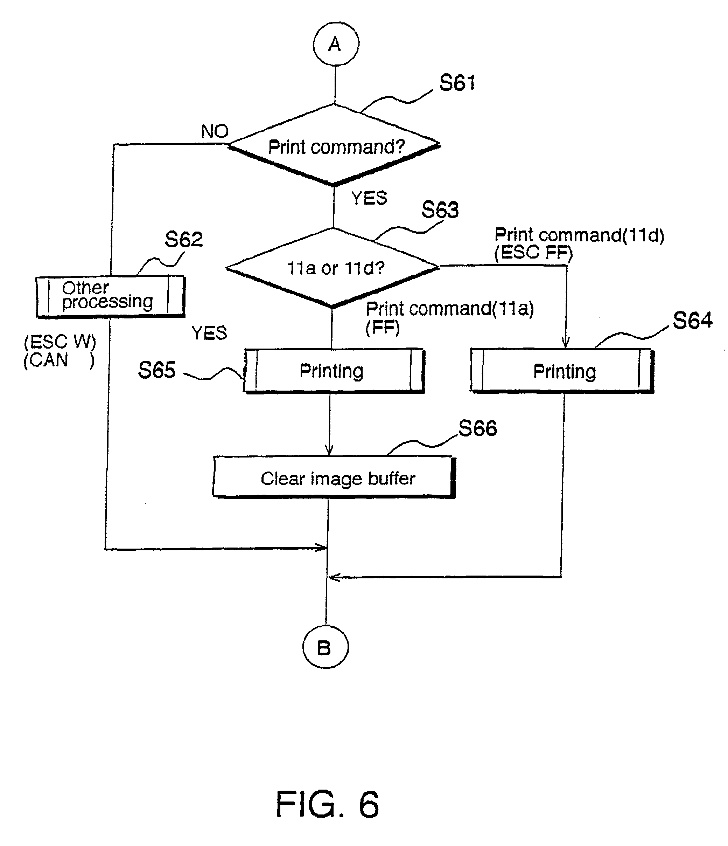

Next, a first embodiment of present invention is explained using Figs. 5 and 6. Fig. 5 is a functional block diagram of the first embodiment. In this embodiment, two types of print command 11a and 11d are employed. Data receiving means 4 identifies the type of print command and sends it to printing means 8 and first erasure means 6. Erasure mode selection command 11c of the example described above is not used in this first embodiment.

Printing means 8 performs the same print processing for both of these two types of print command. That is, read request 15 for the print image data in storage means 7 is issued, and print image data 13 read out from storage means 7 are printed in the same way as in the example explained before.

The difference between this first embodiment and the example explained before is in the operation of the first erasure means. That is, the first erasure means sets the erasure mode in response to print command 11a (corresponds to command code "FF" described below) and sets the erasure disable mode in response to print command 11d (command code "ESC FF" described below). A detailed explanation is given below with reference to Fig. 6.

Fig. 6 is a flowchart describing the command processing corresponding to step S6 in the flowchart of Fig. 3 illustrating the operation of the CPU in this embodiment of present invention. In step S61, it is judged whether or not the command is a print command. If it is not a print command, then processing corresponding to the various commands is performed in step S62. For example, the image buffer area designation command (ESC W) or the image buffer clear command (CAN) described below is executed here.

If the command is judged to be a print command in step S61, then it is examined in step S63 which of two types of print command it is. If it is print command 11d, i.e., command code "ESC FF" (hexadecimal 1B_{H} 0C_{H}). then printing is performed in step S64, but the image buffer is not cleared upon completion of printing. That is, the erasure disable mode is set. If the command is judged in step S63 to be print command 11a, i.e., command code "FF" (hexadecimal 0C_{H}), however, then the image buffer is cleared in step S66 upon completion of printing in step S65.

Therefore, since image buffer 7a is cleared after printing the data of one page, for example, by using command code "FF," when the user wants to print different characters each page, the desired printing result can be obtained with the transmission and development of a small amount of print data as described above.

When control code "ESC FF" is used, however, the data of one page are printed in the same way as with the control code "FF", but image buffer 7a is not cleared after printing. That is, this command is used when a plurality of copies of the same print image data is required, and by sending the control code "ESC FF" the same number of times as the number of copies required, it is not necessary for host device 1 to resend the print data and for printer 3 to generate the print image data since the print image data once developed remain in the image buffer.

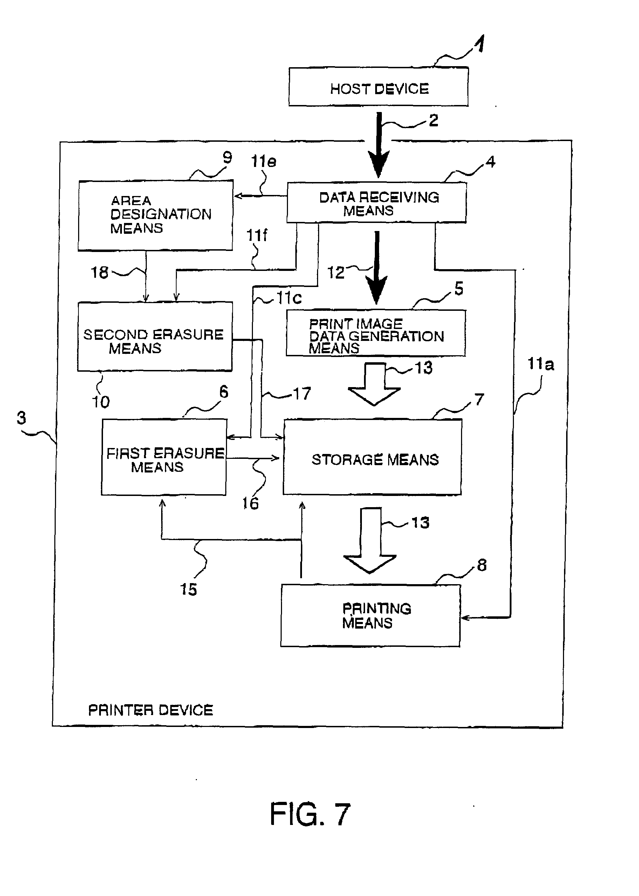

Next is an explanation of a second embodiment of the present invention referring to Figs. 7 and 8. Fig. 7 is a functional block diagram of the second embodiment. Area designation means 9 and second erasure means 10 are added to the functional block diagram of Fig. 1.

Area designation means 9 designates an area in image buffer 7a of storage means 7 in accordance with a command 11e identified by data receiving means 4, and the designated area 18 is output to second erasure means 10. Second erasure means 10 outputs erasure request 17 for the area in image buffer 7a corresponding to designated area 18 to storage means 7 in accordance with command 11f identified by data receiving means 4. Erasure request 17 differs from erasure request 16 in that it is output irrespective of completion of the printing. By this means, part of the image buffer can be erased and rewritten prior to printing. The rewriting operation is explained in detail below using Fig. 8.

In this example, the print data "3" in the last line is to be incremented to "4" and "5" in subsequent printing. In the prior art, each time one page is printed, the memory is initialized and the host computer must send the following character codes and format control codes again "A, B, C, D, E, LF, F, G, H, I, J, LF, K, L, M, N, O, LF, P, Q, R, S, T, LF, U, V, W, X, Y, LF, Z, 0, 0, 0, 4, FF." It takes much time for the host device to send these data and it takes substantial time to develop the print data, which is not efficient.

According to this second embodiment, after printing the following the host computer sends the control command 11e "ESC W x y dx dy" after which the area of the hatched part is cleared in response to another control command "CAN" also sent from the host device.
A B C D B
F G H I J
K L M N O
P Q R S T
U V W X Y
Z 0 0 0 3

Here, "ESC W" is a control command that sets a rectangular area, and when expressed in hexadecimal notation, "ESC" becomes 1B_{H} and "W" becomes 57_{H}. "x y dx dy" are parameters for the "ESC W" command, where "x y" are the coordinates of one point of the area in the horizontal direction and the vertical direction, and "dx dy" indicate the width/height of the area in the horizontal direction and the vertical direction. Processing of this command corresponds to the function of area designation means 9 in Fig. 7.

"CAN" is a command that clears the designated area and is 18_{H} in hexadecimal notation. Processing of this command is equivalent to the function of second erasure means 10 in Fig. 7.

Further, if the host computer sends the print data "4" and information on the position where it should be printed after clearing the area corresponding to that position, repeated printing of only partially changed print image data can thus be performed by merely developing one character prior to each repetition. By repeating this operation, the smallest necessary amount of data can be sent and print data developed while the character data "3" on the last line is incremented to "4" and "5", etc. thus making it possible to offer a high-throughput printer.

While the basic structure of the second embodiment has been described on the basis of Fig. 1, it will be appreciated that in the second embodiment of the invention the area designation means and the second erasure means of Fig. 7 are in fact combined with the first embodiment of the invention.

As has been described, the first embodiment does not have the area designation means and the second erasure means of the second embodiment. Under certain circumstances the first embodiment, nevertheless, allows repeated printing of only partially changed print data without requiring the whole image buffer to be rewritten. This will be explained with reference to Fig. 8. In Fig. 8, the white area within the larger square represents white or "0" pixels and the black lines forming the characters and numbers represent black or "1" pixels in the image buffer. When the image buffer has been cleared (the image data erased) all pixels are "0" pixels. Therefore, when image data are subsequently written into the image buffer it is sufficient to write only "1" pixels at the respective positions while "0" pixels need not be written. As will be understood, if only "1" pixels are written into the image buffer without clearing it before, old and new print image data may be superposed. On the other hand, if the pixel pattern employed to overwrite a certain part of the image buffer (such as the hatched area in Fig. 8) includes both "1" pixels and "0" pixels, the previous pattern in that part will be removed and replaced by the new pattern. Thus, if the character generator is capable of providing pixel patterns including "0" pixels and "1" pixels, all the host device would have to sent to the printing apparatus is the position information and the new character code thereby to allow changing some of the print image data in the image buffer and subsequently reprinting the image composed of the unchanged and the changed print image data.

While the invention has been explained with reference to the development of character codes or graphic language data into print image data, it is to be noted that the invention is also applicable to cases where print image data are generated in the host device, sent to the printing apparatus and stored in the image buffer without requiring any development in the printing apparatus. Irrespective of whether character codes or print image data are transferred from the host device to the printing apparatus, the present invention allows to reduce the amount of data to be transferred in all cases where the same or only partially different print image data are to be printed more than one time.

## Claims

1. A printing apparatus adapted to receive print data and control data from a host device (1), the printing apparatus comprising:
storage means (7, 7a, 23) for storing print image data corresponding to print data received from the host device,
printing means (8, 21, 25) for printing said print image data on a recording medium in response to a print command (11a, 11d) among said control data,
first erasure means (6, 21) for erasing the print image data in said storage means in response to said printing means having printed these data, and
erasure control means (21) responsive to predetermined control data (11a, 11d) among the control data received from the host device (1) for switching between a first mode of operation in which said first erasure means (6, 21) is enabled and a second mode of operation in which said first erasure means (6, 21) is disabled,
**characterized in that** said printing means is adapted to print said print image data on the recording medium in response to each of two alternative print commands among said control data and said erasure control means (21) is adapted to switch to said first mode of operation in response to a first one of said two print commands and to said second mode of operation in response to the second one of said two print commands.

2. The apparatus according to Claim 1, further **characterized by**:
area designation means (9) responsive to a predetermined first control command among the control data (11e) received from said host device (1) for designating part or all of said storage means (7), and
second erasure means (10) responsive to a predetermined second control command among the control data (11f) received from said host device (1) for erasing only the print image data stored in the part or all of said storage means designated by said area designation means (9).

3. A method of controlling a printing apparatus adapted to receive print data and control data from a host device (1), comprising the steps of:
(a) storing print image data corresponding to print data received from the host device in storage means (7, 7a, 23),
(b) printing said print image data on a recording medium in response to a print command among said control data received from the host device,
(c) switching the printing apparatus to a first or a second one of two predetermined modes of operation in response to predetermined control data (11a, 11d) among the control data received from the host device (1), and
(d) erasing the print image data in said storage means after they have been printed in step (b) if and only if the printing apparatus is in the first one of said two modes of operation,
**characterized in that**
step (b) is executed in response to each of two alternative print commands among said control data and the printing apparatus is switched to said first mode of operation in response to a first one of said two print commands and to said second mode of operation in response to the second one of said two print commands.

4. The method according to Claim 3, **characterized by** comprising the further steps of:
(e) designating in response to a predetermined first control command among the control data (11e) received from said host device (1) a part or all of said storage means (7), and
(f) erasing, in response to a predetermined second control command among the control data (11f) received from said host device (1), only the print image data stored in the part or all of said storage means designated in step (e).

## Patentansprüche

1. Ein Druckapparat, der gestaltet ist, um Druckdaten und Steuerdaten von einer Host-Vorrichtung (1) zu empfangen, aufweisend:
Speichermittel (7,7a, 23) zum Speichern von Druckbilddaten, welche von der Host-Vorrichtung empfangenen Druckdaten entsprechen,
Druckmittel (8, 21, 25) zum Drucken der Druckbilddaten auf ein Aufzeichnungsmedium in Antwort auf einen Druckbefehl (11a, 11d) unter den Steuerdaten,
erste Löschmittel (6, 21) zum Löschen der Druckbilddaten aus den Speichermitteln als Antwort darauf, dass die Druckmittel diese Daten gedruckt haben, und
Löschungssteuermittel (21), die auf vorbestimmte Steuerdaten (11a, 11d) unter den von der Host-Vorrichtung (1) empfangenen Steuerdaten, ansprechen, um zwischen einer ersten Betriebsweise, bei welcher die ersten Löschmittel (6, 21) eingeschaltet sind, und einer zweiten Betriebsweise, bei welcher die ersten Löschmittel (6, 21) ausgeschaltet sind, zu schalten,
**dadurch gekennzeichnet, dass** die Druckmittel gestaltet sind, um in Antwort auf jeden von zwei alternativen Druckbefehle unter den Steuerdaten die Druckbilddaten auf das Aufzeichnungsmedium zu drucken, und die Löschungssteuermittel (21) gestaltet sind, um in Antwort auf einen ersten der zwei Druckbefehle zu der ersten Betriebsweise und in Antwort auf den zweiten der beiden Druckbefehle zu der zweiten Betriebsweise umzuschalten.

2. Apparat nach Anspruch 1, weiterhin **gekennzeichnet durch:**
Mittel (9) zur Bereichsbestimmung, welche auf einen vorbestimmten ersten Steuerbefehl unter den von der Host-Vorrichtung (1) empfangenen Steuerdaten (11e) ansprechen, um einen Teil oder das gesamte Speichermittel (7) zu bestimmen, und
zweite Löschmittel (10), die auf einen vorbestimmten zweiten Steuerbefehl unter den von der Host-Vorrichtung (1) empfangenen Steuerdaten (11f) ansprechen, um lediglich die Druckbilddaten zu löschen, welche in dem Teil oder dem gesamten Speichermittel, der oder das **durch** die Mittel (9) zur Bereichsbestimmung bestimmt wurde, gespeichert sind.

3. Verfahren zum Steuern eines Druckapparats, welcher gestaltet ist, um Druckdaten und Steuerdaten von einer Host-Vorrichtung (1) zu empfangen, aufweisend die Schritte:
(a) Speichern von Druckbilddaten, welche von der Host-Vorrichtung empfangenen Druckdaten entsprechen, in Speichermitteln (7, 7a, 23),
(b) Drucken der Druckbilddaten auf ein Aufzeichnungsmedium in Antwort auf einen Druckbefehl unter den von der Host-Vorrichtung empfangenen Steuerdaten,
(c) Umschalten des Druckapparats zu einer ersten oder einer zweiten von zwei vorbestimmten Betriebsweisen in Antwort auf vorbestimmte Steuerdaten (11a, 11d) unter den von der Host-Vorrichtung (1) erhaltenen Steuerdaten, und
(d) Löschen der Druckbilddaten aus den Speichermitteln, nachdem diese in Schritt (b) gedruckt wurden, falls und nur falls sich der Druckapparat in der ersten der beiden Betriebsweisen befindet,
**dadurch gekennzeichnet, dass**
Schritt (b) in Antwort auf jeden von zwei alternativen Druckbefehlen unter den Steuerdaten ausgeführt wird, und der Druckapparat in Antwort auf einen ersten der beiden Druckbefehle in die erste Betriebsweise und in Antwort auf den zweiten der beiden Druckbefehle in die zweite Betriebsweise umgeschaltet wird.

4. Verfahren nach Anspruch 3, **dadurch gekennzeichnet, dass** es die weiteren Schritte aufweist:
(e) Bestimmen in Antwort auf einen vorbestimmten ersten Steuerbefehl unter den von der Host-Vorrichtung (1) empfangenen Steuerdaten (11e), eines Teils oder des gesamten Speichermittels (7), und
(f) Löschen in Antwort auf einen vorbestimmten zweiten Steuerbefehl unter den von der Host-Vorrichtung (1) empfangenen Steuerdaten (11f) lediglich der Druckbilddaten, die in dem Teil oder in dem gesamten Speichermittel, der oder das in Schritt (e) bestimmt wurde, gespeichert sind.

## Revendications

1. Dispositif d'impression adapté pour recevoir des données d'impression et des données de commande depuis un dispositif hôte (1), le dispositif comprenant :
un moyen de mémorisation (7, 7a, 23) destiné à mémoriser des données image à imprimer correspondant aux données d'impression reçues du dispositif hôte,
un moyen d'impression (8, 21, 25) destiné à imprimer les données image à imprimer sur un support d'enregistrement en réponse à une commande d'impression (11a, 11d) incluse dans les données de commande,
un premier moyen de suppression (6, 21) destiné à supprimer les données image à imprimer dans le moyen de mémorisation en réponse au fait que le moyen d'impression a imprimé ces données, et
un moyen de commande de suppression (21) sensible à des données prédéterminées de commande (11a, 11d) incluses dans les données de commande reçues du dispositif hôte (1) pour passer d'un premier mode de fonctionnement, dans lequel le premier moyen de suppression (6, 21) est activé, à un deuxième mode de fonctionnement, dans lequel le premier moyen de suppression (6, 21) est désactivé, et inversement,
**caractérisé en ce que** le moyen d'impression est adapté pour imprimer les données image à imprimer sur le support d'enregistrement en réponse à chacune des deux commandes possibles d'impression incluses dans les données de commande et **en ce que** le moyen de commande de suppression (21) est adapté pour passer du premier mode de fonctionnement en réponse à une première desdites deux commandes d'impression au deuxième mode de fonctionnement en réponse à une deuxième desdites deux commandes d'impression.

2. Dispositif selon la revendication 1, **caractérisé en outre par** :
un moyen de désignation de zone (9) sensible à une première instruction prédéterminée de commande incluse dans les données de commande (11e) reçues du dispositif hôte (1) pour désigner tout ou partie du moyen de mémorisation (7), et
un deuxième moyen de suppression (10) sensible à une deuxième instruction prédéterminée de commande incluse dans les données de
commande (11f) reçues du dispositif hôte (1) pour supprimer uniquement les données image à imprimer enregistrées dans la partie ou la totalité du moyen de mémorisation désignée par le moyen de désignation de zone (9).

3. Procédé de commande d'un dispositif d'impression adapté pour recevoir des données d'impression et des données de commande depuis un dispositif hôte (1), comprenant les étapes consistant à :
(a) enregistrer les données image à imprimer correspondant aux données d'impression reçues du dispositif hôte dans le moyen de mémorisation (7, 7a, 23),
(b) imprimer les données image à imprimer sur un support d'enregistrement en réponse à une commande d'impression incluse dans les données de commande reçues du dispositif hôte,
(c) commuter le dispositif d'impression sur un premier ou un deuxième des deux modes prédéterminés de fonctionnement en réponse à des données prédéterminées de commande (11a, 11d) incluses dans les données de commande reçues du dispositif hôte (1), et
(d) supprimer les données image à imprimer dans le moyen de mémorisation après leur impression à l'étape (b) si et uniquement si le dispositif d'impression est dans le premier desdits deux modes de fonctionnement,
**caractérisé en ce que**
l'étape (b) est exécutée en réponse à chacune des deux commandes possibles d'impression incluses dans les données de commande et **en ce que** le dispositif d'impression est commuté sur le premier mode de fonctionnement en réponse à une première desdites deux commandes d'impression et sur le deuxième mode de fonctionnement en réponse à une deuxième desdites deux commandes d'impression.

4. Procédé selon la revendication 3, **caractérisé en ce qu'**il comprend en outre les étapes consistant à :
(e) désigner, en réponse à une première instruction prédéterminée de commande incluse dans les données de commande (11e) reçues du dispositif hôte (1) tout ou partie du moyen de mémorisation (7), et
(f) supprimer, en réponse à une deuxième instruction prédéterminée de commande incluse dans les données de commande (11f) reçues du dispositif hôte (1) uniquement les données image à imprimer enregistrées dans la partie ou la totalité du moyen de mémorisation désignée à l'étape (e).
